Europäisches Patentamt

European Patent Office

Office européen des brevets

(11) Veröffentlichungsnummer: **0 346 717 B1**

# EUROPÄISCHE PATENTSCHRIFT

(45) Veröffentlichungstag der Patentschrift: **03.08.94**

(51) Int. Cl.⁵: **C08K 5/10**, C08L 27/06, C08J 5/18

(21) Anmeldenummer: **89110120.6**

(22) Anmeldetag: **05.06.89**

(54) **Verfahren zur Herstellung von PVC-hart-Folien.**

(30) Priorität: **13.06.88 DE 3820065**

(43) Veröffentlichungstag der Anmeldung:
**20.12.89 Patentblatt 89/51**

(45) Bekanntmachung des Hinweises auf die Patenterteilung:
**03.08.94 Patentblatt 94/31**

(84) Benannte Vertragsstaaten:
**DE IT NL**

(56) Entgegenhaltungen:
**EP-A- 0 273 283**
**DE-A- 2 022 011**
**DE-B- 1 258 085**

(73) Patentinhaber: **NEYNABER CHEMIE GmbH**
**Am Wedenberg**
**Postfach 11 20**
**D-27608 Loxstedt(DE)**

(72) Erfinder: **Worschech, Kurt, Dr.**
**Alte Strasse 4**
**D-2854 Loxstedt(DE)**
Erfinder: **Wedl, Peter**
**Löningstrasse 13**
**D-2850 Bremerhaven(DE)**
Erfinder: **Brand, Ernst Udo**
**Allersstrasse 18**
**D-2850 Bremerhaven(DE)**
Erfinder: **Fleischer, Erwin**
**Dwarsweg 1**
**D-2858 Schiffdorf(DE)**

**Beschreibung**

Die Erfindung betrifft ein Verfahren zur Herstellung von PVC-hart-Folien nach dem Niedertemperatur-Verfahren durch Verarbeitung einer Emulsions-PVC-Masse mit K-Werten von 70 bis 80 mittels Kalander- und Schmelzwalzen.

Das Niedertemperatur-, auch Luvitherm-Verfahren genannt, ist eine bekannte Technologie zur Herstellung von PVC-hart-Folien, das eingehend in Becker/Braun, Kunststoff-Handbuch Bd. 2/2, S. 1006-1007, Carl Hanser-Verlag München (1986) beschrieben ist. Es arbeitet mit Emulsions-PVC-Typen mit K-Werten von 70 bis 80 und gestattet die Herstellung sowohl gereckter Folien, die insbesondere als Klebebänder eingesetzt werden, als auch ungereckter Folien, die zum Beispiel becherförmig tiefgezogen werden und als Verpackungsbehälter, insbesondere für Margarine, zum Einsatz kommen. Derartige Folien werden häufig bedruckt, wobei anstelle der früher üblichen, lösemittelhaltigen Druckfarben aus arbeitsphysiologischen Gründen neuerdings wasserhaltige Druckfarben bevorzugt werden.

Die für die Herstellung von PVC-hart-Folien der vorstehend genannten Art verwendeten Emulsions-PVC-Typen enthalten herstellungsbedingt Emulgatoren in einer Größenordnung von ca. 2 Gew.-%. Für die Herstellung von PVC-hart-Folien werden Gleitmittel bis zu 6 Gew.-Teilen pro 100 Gew.-Teilen Harz (phr) benötigt. Als Gleitmittel werden Derivate der Montansäure, insbesondere Vollester des Ethylenglykols bzw. des Butan-1,3-diols, eingesetzt, da nur solche Wachse die erforderliche Verträglichkeit in der Matrix PVC/Emulgator aufweisen. Auch die genannten Montansäureester haben jedoch Grenzen hinsichtlich ihrer Verträglichkeit im PVC. Überdies wirken sie bereits bei einer Dosierung von 3,5 bis 5 phr bereits hydrophobierend, so daß die Bedruckbarkeit von PVC-hart-Folien mit wasserhaltigen Druckfarben beeinträchtigt ist.

Das Verfahren der Erfindung ist auf die Herstellung von mit wasserhaltigen Druckfarben bedruckbaren PVC-hart-Folien gerichtet, bei denen Spezielle Gleitmittel zur Anwendung kommen, die auch bei Zusatzmengen in Größenordnungen von 6 Gew.-Teilen mit den im Emulsions-PVC enthaltenen Emulgatoren verträglich sind.

Diese Aufgabe wird erfindungsgemäß dadurch gelöst, daß man der Emulsions-PVC-Masse Partialestern aus Montansäure und Polyalkoholen mit 2 bis 12, insbesondere 3 bis 12 Kohlenstoffatomen, und 2 bis 6, insbesondere 3 bis 6 Hydroxylgruppen in Mengen von 0,5 bis 7 Gew.-Teilen pro 100 Gew.-Teile Emulsions - PVC zusetzt, wobei die Partialester im Molekül mindestens eine freie Hydroxylgruppe aufweisen und das Zahlenverhältnis der freien Hydroxylgruppen zu Montanoylgruppen zwischen 5 : 1 und 1 : 3 beträgt.

Typische Beispiele für Polyalkohole mit 3 bis 12 Kohlenstoffatomen und 3 bis 6 Hydroxylgruppen zur Bildung der erfindungsgemäß einzusetzenden Partialester der Montansäure sind Glycerin, Diglycerin, Triglycerin und Tetraglycerin einschließlich Isomeren derselben, Trimethylolpropan, Ditrimethylolpropan, Pentaerythrit, Dipentaerythrit, Mannit und Sorbit sowie Sorbitane.

Bevorzugte Vertreter der erfindungsgemäß einzusetzenden Partialester sind Glycerin-monomontanat, Glycerin-dimontanat, Diglycerin-monomontanat, Triglycerin-monomontanat, Tetraglycerin-monomontanat, Pentaerythrit-monomontanat, Dipentaerythrit-monomontanat und Sorbitan-monomontanat. Diese Partialester können erhalten werden, indem man Montansäure mit den entsprechenden Polyalkoholen in Gegenwart üblicher saurer Katalysatoren, z.B. Toluolsulfonsäure, metallisches Zinn, Zinn(II)oxid, saure Titanverbindungen oder dergleichen, in den den gewünschten Endprodukten entsprechenden stöchiometrischen Verhältnissen umsetzt. Dem Fachmann ist geläufig, daß bei derartigen Reaktionen nicht ausschließlich der gewünschte Partialester erhalten wird, sondern stets ein Gemisch, das überwiegend den gewünschten Partialester enthält. Darüber hinaus ist es auch möglich, gezielt Partialestergemische herzustellen, bei denen z.B. ein Mol Polyalkohol statistisch mit 1,5 Mol Montansäure zu sogenannten Sesquimontanaten reagiert. Typische Beispiels für derartige Partialestergemische sind Glycerin-1,5-montanat oder Pentaerythrit-1,8-montanat.

Gemäß einer weiteren vorteilhaften Ausführungsform der Erfindung setzt man die Partialester in Mengen von 2 bis 6 Gew.-Teilen pro 100 Gew.-Teilen Emulsions-PVC zu.

Weiterhin ist bevorzugt, der Emulsions-PVC-Masse wirksame Mengen üblicher Zinnstabilisatoren, z.B. Butyl-zinnmercaptopropionat oder organische schwefelhaltige Stabilisatoren, z.B. Diphenylthioharnstoff, zuzusetzen.

Weiterhin kann man den Emulsions-PVC-Massen, wenn diese zu ungereckten Folien verarbeitet werden sollen, geringe Mengen an Füllstoffen, z.B. Titandioxid, zusetzen.

Die Erfindung wird im folgenden anhand von bevorzugten Ausführungsbeispielen näher erläutert.

Herstellung erfindungsgemäß einzusetzender Partialester.

a) Glycerin-dimontanat

Ein Dreihalskolben mit Rührer, Thermometer und absteigendem Liebigkühler wurde mit 19 g Glycerin (0,207 Mol), 165 g Montansäure (0,413 Mol; Hoechst-Wachs S) und 0,4 g Zinnstaub beschickt. Das Gemisch wurde unter Rühren auf 210°C erhitzt, wobei ein leichtes Vakuum angelegt wrude, das innerhalb von 1,5 h auf 20 mbar gesteigert wurde. Nach dieser Zeit war die Säurezahl auf ca. 1 abgefallen. Das Gemisch wurde auf 100°C gekühlt, gebleicht und filtriert. Man erhielt ein hellgelbes Hartwachs mit einem Tropfpunkt von 79°C.

b) Glycerin-monomontanat

Analog zu a) wurden 400 g Montansäure (Hoechst-Wachs S), 97 g Glycerin (5 % Überschuß) und 0,5 g Zinnstaub umgesetzt. Man erhielt ein braunstichig-gelbes Hartwachs mit einem Tropfpunkt von 84,2°C.

c) Diglycerin-sesquimontanat

Analog zu a) wurden 112 g Diglycerin (0,67 Mol), 400 g Montansäure (1,0 Mol) und 0,4 g Zinnstaub auf 200°C erhitzt, wobei ein leichtes Vakuum angelegt wurde. Dieses wurde innerhalb von 3,5 h auf 24 mbar gesteigert. Das Produkt wies eine Säurezahl von ca. 1 auf. Nach dem Abkühlen auf 100°C, Bleichen und Filtrieren erhielt man ein braunfarbenes Hartwachs mit einem Tropfpunkt von 81°C.

d) Pentaerythrit-dimontanat

Analog zu a) wurden 28,1 g Pentaerythrit (0,207 Mol), 165 g Montansäure (0,413 Mol) und 0,4 g Zinnstaub auf 200°C erhitzt, wobei ein leichtes Vakuum angelegt wurde. Nach 2 h waren 20 mbar erreicht; die Säurezahl betrug ca. 1. Nach dem Abkühlen auf 100°C, Bleichen und Filtrieren erhielt man ein braunstichig-gelbes Hartwachs mit einem Tropfpunkt von 79°C.

Analog zu der in a) beschriebenen Weise wurden

e) Pentaerythrit-1,8-montanat,

f) Pentaerythrit-2,5-montanat,

g) Sorbitan-dimontanat,

h) Diglycerin-monomontanat,

i) Diglycerin-trimontanat

j) Tetraglycerin-monomontanat

k) Tetraglycerin-trimontanat,

l) iso-Tetraglycerin-monomontanat,

m) Glycerin-1,4-monomontanat

erhalten.

Beispiele 1 bis 26.

Einer Grundmischung aus 100 Gew.-Teilen eines handelsüblichen Emulsions-PVC (K = 78) und 0,5 Gew.-Teilen Butylzinnmercaptopropionat wurden verschiedene Mengen verschiedener Partialester zugesetzt; die im einzelnen zugesetzten Partialester sowie die Mengen derselben ergeben sich aus der nachfolgenden Tabelle.

Das Plastizierverhalten der erhaltenen Formmassen wurde mit Hilfe eines Plastographen (Plasticorder PL 151; Fa. Brabender; siehe P. Klenk, "Der Plastverarbeiter", 21. Jahrgang, 1970/7, S. 642-644) geprüft. Die Kammertemperatur betrug 165°C, die Drehzahl 30 U/min. Die Untersuchungen wurden jeweils mit 33 g Substanz ausgeführt.

Als Vergleichssubstanzen wurden ein handelsübliches Ethylenglykoldimontanat (Hoechst-Wachs [R] E) und ein teilverseiftes, calciumhaltiges Butylenglykoldimontanat (Hoechst-Wachs [R] OP) getestet.

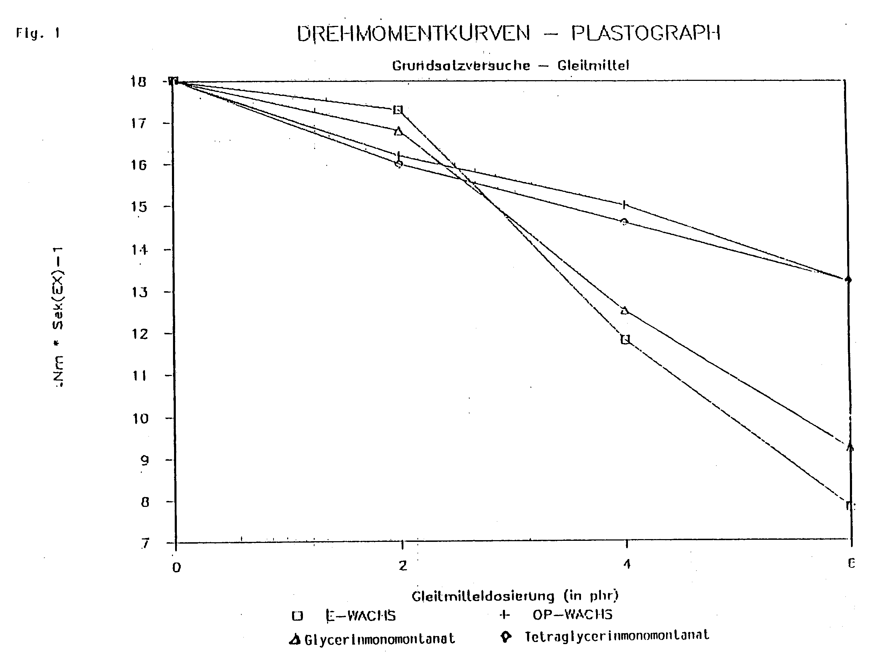

Die gefundenen Ergebnisse sind der Fig. 1 zu entnehmen, die die ermittelten Drehmomentkurven wiedergibt. Es zeigt sich, daß die erfindungsgemäß erhaltenen PVC-Formmassen ein ähnliches Plastifizierverhalten wie die Vergleichsmassen aufweisen und daher als Gleitmittel für hart-PVC-Folien geeignet sind.

Für die Ermittlung der Bedruckbarkeit mit wasserhaltigen Drucktinten wurde zum einen der Randwinkeltest nach Dipl.-Ing. Opkircher und zum anderen der Tintentest in Anlehnung an DIN 53364 eingesetzt. Für den Test nach Dipl.-Ing. Opkircher wurden verschiedene aus den obengenannten PVC-Formmassen hergestellte Folien mit je einem Tropfen destillierten Wassers versetzt; anschließend wurde der Randwinkel zwischen Folie und Tropfen bestimmt. Je kleiner der ermittelte Randwinkel ist, desto besser ist die Benetzbarkeit der Folienoberfläche mit der Prüftinte.

Die Beurteilung des Tintentests nach DIN 53364 erfolgte nach einer Notenskala von 1 (gut benetzbar) bis 5 (nicht benetzbar).

Die in den vorstehend genannten Tests erhaltenen Ergebnisse sind in der nachfolgenden Tabelle zusammengefaßt, die weiterhin die Ergebnisse für Vergleichsrezepturen zeigt, und zwar für ohne Gleitmittelzusatz hergestellte Folien (Vergleich A) und für Folien mit verschiedenen Mengen an zugesetztem Ethylenglykol-dimontanat (Vergleich B bis D).

Es zeigt sich, daß das gemäß dem Stand der Technik zugesetzte Ethylenglykoldimontanat hydrophobierend wirkt; dagegen geben die erfindungsgemäß mit Partialmontanaten als Gleitmittel hergestellten Folien eine verbesserte Benetzbarkeit, die häufig sogar diejenige der ohne jeden Gleitmittelzusatz hergestellten Folien übertrifft.

## Tabelle

### Hergestellte PVC-hart-Folien

Grundansatz: 100    Gew.-Teile E-PVC (K = 70)

0,5 Gew.-Teile Butylzinnmercaptopropionat

| Beispiel | Partialesterzusatz in phr | Randwinkeltest (°C) | | | | Tintentest DIN 53 364 ($mN.m^{-1}$) | | | | | | |
|---|---|---|---|---|---|---|---|---|---|---|---|---|
| | | | | | | 30 | 32 | 35 | 38 | 41 | 44 | 48 |
| 1 | 2,0 b | 50 | 50 | 45 | 40 | 1 | 1 | 1 | 1 | 1 | 2 | 3 |
| 2 | 4,0 b | 40 | 40 | 40 | 40 | 1 | 1 | 1 | 1 | 2 | 4 | 5 |
| 3 | 6,0 b | 35 | 35 | 35 | 35 | 1 | 1 | 1 | 1 | 3 | 5 | – |
| 4 | 2,0 a | 30 | 30 | 25 | 25 | 1 | 1 | 1 | 1 | 1 | 3 | 4 |
| 5 | 4,0 a | 25 | 25 | 25 | 25 | 1 | 1 | 1 | 1 | 2 | 4 | 5 |
| 6 | 6,0 a | 35 | 30 | 40 | 40 | 1 | 1 | 1 | 1 | 3 | 5 | – |
| 7 | 2,0 e | 35 | 30 | 40 | 40 | 1 | 1 | 1 | 1 | 2 | 4 | 5 |
| 8 | 4,0 e | 25 | 25 | 30 | 30 | 1 | 1 | 1 | 1 | 2 | 4 | 5 |
| 9 | 6,0 e | 40 | 40 | 35 | 35 | 1 | 1 | 1 | 2 | 4 | 5 | – |
| 10 | 2,0 f | 30 | 30 | 30 | 30 | 1 | 1 | 1 | 1 | 3 | 4 | 5 |
| 11 | 4,0 f | 40 | 40 | 45 | 45 | 1 | 1 | 1 | 1 | 2 | 3 | 3 |
| 12 | 6,0 f | 50 | 50 | 50 | 50 | 1 | 1 | 1 | 1 | 3 | 5 | – |
| 13 | 2,0 g | 40 | 40 | 40 | 40 | 1 | 1 | 1 | 2 | 3 | 4 | 5 |

Tabelle Fortsetzung

| Beispiel | Partialesterzusatz in phr | Randwinkeltest (°C) | | | | Tintentest DIN 53 364 (mN.m$^{-1}$) | | | | | | |
|---|---|---|---|---|---|---|---|---|---|---|---|---|
| | | | | | | 30 | 32 | 35 | 38 | 41 | 44 | 48 |
| 14 | 4,0 g | 40 | 35 | 40 | 35 | 1 | 1 | 1 | 1 | 3 | 4 | — |
| 15 | 6,0 g | 40 | 40 | 40 | 40 | 1 | 1 | 1 | 2 | 4 | 5 | — |
| 16 | 2,0 h | 40 | 30 | 35 | 30 | 1 | 1 | 1 | 2 | 2 | 3 | 4 |
| 17 | 4,0 h | 25 | 25 | 25 | 25 | 1 | 1 | 1 | 2 | 3 | 3 | 4 |
| 18 | 6,0 h | 20 | 20 | 20 | 20 | 1 | 1 | 1 | 2 | 3 | 3 | 4 |
| 19 | 2,0 i | 30 | 35 | 35 | 35 | 1 | 1 | 1 | 1 | 2 | 3 | 4 |
| 20 | 4,0 i | 30 | 35 | 40 | 40 | 1 | 1 | 1 | 1 | 1 | 3 | 4 |
| 21 | 6,0 i | 35 | 35 | 35 | 40 | 1 | 1 | 1 | 1 | 2 | 3 | 4 |
| 22 | 4,0 j | 20 | 25 | 25 | 25 | 1 | 1 | 1 | 1 | 2 | 3 | 4 |
| 23 | 4,0 k | 25 | 25 | 25 | 25 | 1 | 1 | 1 | 1 | 1 | 3 | 4 |
| 24 | 4,0 l | 35 | 40 | 30 | 30 | 1 | 1 | 1 | 1 | 2 | 3 | 4 |
| 25 | 2,0 m | 40 | 40 | 35 | 35 | 1 | 1 | 1 | 1 | 2 | 3 | 4 |
| 26 | 4,0 m | 30 | 30 | 30 | 30 | 1 | 1 | 1 | 1 | 2 | 3 | 4 |
| Vergleich | | | | | | | | | | | | |
| A | Grundansatz | 30 | 30 | 30 | 30 | 1 | 1 | 1 | 1 | 1 | 2 | 3 |
| B | 2,0 E[1] | 40 | 40 | 40 | 40 | 1 | 1 | 1 | 1 | 3 | 5 | — |
| C | 4,0 E[1] | 40 | 40 | 40 | 40 | 1 | 1 | 1 | 2 | 3 | 5 | — |
| D | 6,0 E[1] | 60 | 50 | 50 | 40 | 1 | 1 | 1 | 2 | 4 | 5 | — |

1) Ethylenglykoldimontanat (handelsüblich)

## Patentansprüche

1. Verfahren zur Herstellung von PVC-hart-Folien nach dem Niedertemperatur-Verfahren durch Verarbeitung einer Emulsions-PVC-Masse mit K-Werten von 70 bis 80 mittels Kalander- und Schmelzwalzen, dadurch gekennzeichnet, daß man der Emulsions-PVC-Masse wirksame Mengen an Partialestern aus Montansäure und Polyalkoholen mit 2 bis 12 Kohlenstoffatomen und 2 bis 6 Hydroxylgruppen in Mengen von 0,5 bis 7 Gew.-Teilen pro 100 Gew.-Teile Emulsions - PVC zusetzt, wobei die Partialester im Molekül mindestens eine freie Hydroxylgruppe aufweisen und das zahlenmäßige Verhältnis der freien Hydroxylgruppen zu Montanoylgruppen zwischen 5 : 1 und 1 : 3 beträgt.

**2.** Verfahren nach Anspruch 1, dadurch gekennzeichnet, daß man Partialester aus Montansäure und 3 bis 12 Kohlenstoffatome sowie 3 bis 6 Hydroxylgruppen aufweisenden Polyalkoholen verwendet.

**3.** Verfahren nach Anspruch 1 oder 2, dadurch gekennzeichnet, daß die Partialester aus der von Glycerin-monomontanat, Glycerin-dimontanat, Diglycerin-monomontanat, Diglycerin-trimontanat, Triglycerin-monomontanat, Tetraglycerin-monomontanat, Tetraglycerin-trimontanat, Pentaerythrit-monomontanat, Dipentaerythrit-monomontanat und Sorbitan-monomontanat gebildeten Gruppe ausgewählt sind.

**4.** Verfahren nach mindestens einem der Ansprüche 1 bis 3, dadurch gekennzeichnet, daß man die Partialester in Mengen von 2 bis 6 Gew.-Teilen pro 100 Gew.-Teile Emulsions-PVC zusetzt.

**5.** Verfahren nach mindestens einem der Ansprüche 1 bis 4, dadurch gekennzeichnet, daß man der Emulsions-PVC-Masse wirksame Mengen üblicher Zinnstabilisatoren oder organischer schwefelhaltiger Stabilisatoren zusetzt.

**Claims**

**1.** A process for the production of rigid PVC films by the low-temperature method by processing an emulsion PVC compound with K values of 70 to 80 by calender and melt rolls, characterized in that partial esters of montanic acid and polyalcohols containing 2 to 12 carbon atoms and 2 to 6 hydroxyl groups are added to the emulsion PVC compound in effective quantities of 0.5 to 7 parts by weight per 100 parts by weight of emulsion PVC, the partial esters containing at least one free hydroxyl group in the molecule and the number ratio of free hydroxyl groups to montanoyl groups being between 5:1 and 1:3.

**2.** A process as claimed in claim 1, characterized in that partial esters of montanic acid and polyalcohols containing 3 to 12 carbon atoms and 3 to 6 hydroxyl groups are used.

**3.** A process as claimed in claim 1 or 2, characterized in that the partial esters are selected from the group consisting of glycerol monomontanate, glycerol dimontanate, diglycerol monomontanate, diglycerol trimontanate, triglycerol monomontanate, tetraglycerol monomontanate, tetraglycerol trimontanate, pentaerythritol monomontanate, dipentaerythritol monomontanate and sorbitan monomontanate.

**4.** A process as claimed in at least one of claims 1 to 3, characterized in that the partial esters are added in quantities of 2 to 6 parts by weight per 100 parts by weight of emulsion PVC.

**5.** A process as claimed in at least one of claims 1 to 4, characterized in that effective quantities of typical tin stabilizers or organic sulfur-containing stabilizers are added to the emulsion PVC compound.

**Revendications**

**1.** Procédé de production de feuilles de PVC rigide selon le procédé à basse température, par mise en oeuvre d'une pâte de PVC en émulsion présentant une valeur K comprise entre 70 et 80, à l'aide de cylindres de calandre et de fusion, caractérisé en ce que l'on additionne à la pâte de PVC en émulsion des quantités actives d'esters partiels d'acide montanique et de polyols comportant 2 à 12 atomes de carbone et 2 à 6 groupes hydroxyle, en quantités allant de 0,5 à 7 parties en poids par 100 parties en poids de PVC en émulsion, la molécule desdits esters partiels présentant au moins un groupe hydroxyle libre et le rapport numérique entre les groupes hydroxyle et montanoyle étant compris entre 5:1 et 1:3.

**2.** Procédé selon la revendication 1, caractérisé en ce que l'on utilise des esters partiels d'acide montanique et de polyols comportant 3 à 12 atomes de carbone et 3 à 6 groupes hydroxyle.

**3.** Procédé selon la revendication 1 ou 2, caractérisé en ce que les esters partiels sont sélectionnés parmi le groupe constitué des monomontanate de glycérine, dimontanate de glycérine, monomontanate de diglycérine, trimontanate de diglycérine, monomontanate de triglycérine, monomontanate de tétraglycérine, trimontanate de tétraglycérine, monomontanate de pentaérythrite, monomontanate de dipentaérythrite et monomontanate de sorbitane.

6

4. Procédé selon au moins l'une des revendications 1 à 3, caractérisé en ce que l'on additionne les esters partiels en quantités allant de 2 à 6 parties en poids par 100 parties en poids de PVC en émulsion.

5. Procédé selon au moins l'une des revendications 1 à 4, caractérisé en ce que l'on additionne à la pâte de PVC en émulsion des quantités actives de stabilisants à l'étain ou de stabilisants sulfureux organiques usuels.

EP 0 346 717 B1

Fig. 1

# DREHMOMENTKURVEN — PLASTOGRAPH

## Grundsatzversuche — Gleitmittel

Y-axis: :Nrm * Sek(EX)−1

X-axis: Gleitmitteldosierung (in phr)

□   E—WACHS          +   OP—WACHS

△ Glycerinmonomontanat     ♦ Tetraglycerinmonomontanat